# EUROPÄISCHE PATENTSCHRIFT

(11) **EP 3 097 974 B1**
(45) Veröffentlichungstag und Bekanntmachung des Hinweises auf die Patenterteilung: **04.11.2020**
(21) Anmeldenummer: 15169768.7
(22) Anmeldetag: 29.05.2015
(51) Int. Cl.: B01F 13/08, B01F 15/00, H02K 5/128, H02K 11/215, H02N 15/00, G01N 35/00

(54) **MAGNETRÜHRER FÜR EIN IN VITRO-DIAGNOSTIKSYSTEM**
MAGNETIC STIRRER FOR AN IN VITRO DIAGNOSIS SYSTEM
AGITATEUR MAGNÉTIQUE POUR UN SYSTÈME DE DIAGNOSTIC IN VITRO

(43) Veröffentlichungstag der Anmeldung: 30.11.2016
(73) Patentinhaber: Siemens Healthcare Diagnostics Products GmbH, 35041 Marburg (DE)
(72) Erfinder: Wiedekind-Klein, Alexander, 56812 Cochem (DE)

(56) Entgegenhaltungen:
- EP-A2- 0 692 457
- DE-A1- 3 322 409
- DE-A1- 4 423 837
- DE-U1- 9 006 935
- DE-U1- 9 113 105

## Beschreibung

Die Erfindung betrifft einen Magnetrührer für ein in vitro-Diagnostiksystem, umfassend einen Antriebsmotor, einen an einer Achse des Antriebsmotors befestigten magnetischen Körper und einen Magnetfeldsensor.

Heutige in vitro-Diagnostiksysteme, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern, wie z.B. Transferarme mit Greiffunktion, Transportbänder oder drehbare Transporträder, sowie Vorrichtungen zum Transfer von Flüssigkeiten, wie z.B. Pipettiervorrichtungen in einem Gerätegehäuse untergebracht. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Je nach Art der durchgeführten Untersuchung kann eine - auch regelmäßig wiederkehrende - Durchmischung der in einer Messküvette befindlichen Flüssigkeit erforderlich sein. Insbesondere Reaktionsansätze mit partikulären Bestandteilen bedürfen häufig einer Durchmischung, damit eine Sedimentation der Partikel vermieden wird. Hierzu kommen üblicherweise Magnetrührer zur Anwendung. Hierbei rotiert ein an der Achse eines Antriebsmotors befestigter magnetischer Körper unter der in einer Aufnahmeposition angeordneten Messküvette mit regelbarer Geschwindigkeit. In der Messküvette befindet sich ein ebenfalls magnetisches Rührelement, beispielsweise in Form eines Stäbchens oder Kügelchens. Mindestens einer der beiden magnetischen Körper, d.h. das Rührelement oder der an der Achse des Antriebsmotors befestigte magnetische Körper sind hierbei dauermagnetisch, so dass durch die magnetische Kopplung zwischen rotierendem Körper und Rührelement letzteres ebenfalls in Rotation versetzt wird und so die Flüssigkeit in der Messküvette in Bewegung gesetzt wird.

In DE 33 22 409 A1 und DE 91 13 105 U1 sind Magnetrührer beschrieben, die eine Messung der Drehzahl des Antriebsmotors mittels eines Magnetfeldsensors ermöglichen.

Hierbei kommen aufgrund der kleinen Volumina (üblicherweise kleiner als 1 mL) miniaturisierte Antriebsmotoren zum Einsatz. Diese weisen aufgrund der Miniaturisierung in der Regel keinen Encoder auf. Hierbei handelt es sich um eine in den Antriebsmotor integrierte elektromechanische Einrichtung, die in Abhängigkeit der Drehzahl ein entsprechendes Signal erzeugt. Durch das Fehlen des Encoders bei miniaturisierten Motoren ist es nicht möglich, die korrekte Drehzahl des Motors und somit die Rührfunktion zu überprüfen. Allerdings ist eine korrekte Rührfunktion für eine einwandfreie Analyse der Probe notwendig, so dass eine fehlerhafte Rührfunktion unter Umständen Analyseergebnisse verfälschen kann.

EP 0 692 457 A2 offenbart einen Magnetrührer entsprechend dem Oberbegriff des Anspruchs 1.

Es ist daher Aufgabe der Erfindung, einen Magnetrührer der eingangs genannten Art bereit zu stellen, der den Miniaturisierungsanforderungen eines in vitro-Diagnostiksystems genügt und gleichzeitig eine zuverlässige Überprüfung der Rührfunktion im Betrieb ermöglicht.

Diese Aufgabe wird erfindungsgemäß durch einen Magnetrührer entsprechend Anspruch 1 gelöst.

Es wurde gefunden, dass wegen der notwendigen Miniaturisierung des Antriebsmotors keine Möglichkeit besteht, für eine Detektion der ordnungsgemäßen Drehbewegung im Antriebsmotor selbst zu sorgen. Um dennoch eine Funktionsüberwachung zu ermöglichen, sollte daher eine Detektion der Drehbewegung von außerhalb des Motors erfolgen. Hierfür lässt sich der am Antriebsmotor befestigte magnetische Körper nutzen: Das zwischen magnetischem Körper und Rührelement entstehende Magnetfeld, welches eigentlich zur Übertragung der Drehbewegung auf das Rührelement in einer Messküvette dient, kann auch als Eingangssignal für die Erfassung einer Drehbewegung dienen. Dies erfolgt mittels Detektion durch einen Magnetfeldsensor.

Als Magnetfeldsensor kann beispielsweise ein einfacher digitaler Sensor verwendet werden, der ein digitales Ausgangssignal anhand eines vorbestimmten Parameters des Magnetfelds liefert. Eine bessere Analyse der Drehbewegung ist jedoch möglich, indem vorteilhafterweise der Magnetfeldsensor ein analoger Hall-Sensor ist. Dessen Funktion basiert auf dem Hall-Effekt: Wird ein solcher analoger Hall-Sensor in ein senkrecht dazu verlaufendes Magnetfeld gebracht, liefert er eine Ausgangsspannung, die proportional zur magnetischen Feldstärke ist. Der analoge Hall-Sensor wird hierbei entsprechend geeignet im Nahbereich des magnetischen Körpers angeordnet, um die Drehbewegung und die damit verbundene Änderung des Magnetfeldes auch zuverlässig zu erfassen. Der analoge Hall-Sensor hat den Vorteil eines einfachen Aufbaus und ist in der Regel nur stecknadelkopfgroß. Zudem liefert der analoge Hall-Sensor wesentlich genauere Informationen über die Drehbewegung.

Wenn im vorliegenden Zusammenhang der Nahbereich des magnetischen Körpers erwähnt wird, so ist dieser vorteilhafterweise durch einen Abstand von weniger als 10 cm, vorzugsweise weniger als 5 cm zum magnetischen Körper definiert. In diesem Bereich ist eine zuverlässige Erfassung des Magnetfeldes gewährleistet. Gleichzeitig muss der Abstand auch nicht zu gering sein: Der Sensor muss nämlich nicht direkt am magnetischen Körper sitzen, sondern kann, abhängig von der Magnetstärke, bis zu mehreren cm, vorteilhafterweise mehr als 1 cm entfernt sitzen.

Dabei ist zwischen magnetischem Körper und Magnetfeldsensor eine nicht magnetische Abdeckung angeordnet. Diese ist aus nicht-magnetischem Material wie z.B. Kunststoff oder Aluminium gefertigt. Die Möglichkeit eines relativ großen Abstandes zwischen magnetischem Körper und Magnetfeldsensor in Verbindung mit der Möglichkeit der Anordnung einer nicht magnetischen Abdeckung bieten flexible Designoptionen.

Bei dem Magnetrührer ist der magnetische Körper als Permanentmagnet ausgebildet, und die Nord-Süd-Achse des magnetischen Körpers ist senkrecht zur Achse des Antriebsmotors angeordnet. Dies bietet den Vorteil, dass die Rührelemente nicht als Permanentmagneten ausgebildet sein müssen, was Vorteile z. B. bei deren Vereinzelung bieten kann.

Dabei ist der Magnetfeldsensor so angeordnet, dass er eine Ebene schneidet, die senkrecht zur Achse des Antriebsmotors liegt und den magnetischen Körper schneidet. Der Magnetfeldsensor ist also bezogen auf die Achse des Antriebsmotors in derselben Höhe wie der magnetische Körper angeordnet und von der Achse beabstandet. Hierdurch kann der Magnetfeldsensor das Magnetfeld des magnetischen Körpers und damit dessen Drehbewegung besonders gut erfassen.

Der Magnetrührer umfasst weiterhin vorteilhafterweise eine Auswertungsschaltung mit einem Signalausgang und einem Signaleingang, wobei der Signaleingang mit dem Magnetfeldsensor verbunden ist, und wobei die Auswertungsschaltung dazu ausgebildet ist, einen Stillstand zu erfassen und ein Stillstandssignal am Signalausgang bereit zu stellen. Hierfür ist eine entsprechende Programmlogik innerhalb der Auswertungsschaltung hinterlegt. Das Stillstandssignal wird hier dann erzeugt, wenn die Auswertungsschaltung anhand vorbelegter Kriterien einen Stillstand des Antriebsmotors und damit des Rührstäbchens erkennt. Dieses kann z.B. an eine Steuerungseinrichtung des in vitro-Diagnostiksystems weitergeleitet werden.

In vorteilhafter Ausgestaltung ist die Auswertungsschaltung dazu ausgebildet, den Stillstand anhand eines konstanten Signals am Signaleingang zu erfassen. Ein konstantes, d.h. zeitlich unveränderliches Magnetfeld und damit auch Signal ist nämlich charakteristisch für einen Stillstand des magnetischen Körpers.

Die Auswertungsschaltung ist noch vorteilhafter dazu ausgebildet, neben dem bloßen Stillstand auch eine fehlerhafte Drehbewegung zu erfassen und ein Fehlersignal am Signalausgang bereitzustellen. Eine derartige fehlerhafte Drehbewegung kann beispielsweise durch einen unrunden Lauf des Motors infolge einer Beschädigung oder durch eine Beschädigung der Befestigung des magnetischen Körpers an der Achse entstehen. Das Fehlersignal wird auch dann erzeugt, wenn die Auswertungsschaltung anhand vorbelegter Kriterien eine fehlerhafte Drehbewegung erkennt. Dieses kann wiederum an die Steuerungseinrichtung des in vitro-Diagnostiksystems weitergeleitet werden. Fehler- und Stillstandssignal können ggf. auch identisch sein, da ohnehin in jedem Fall eine Überprüfung erforderlich ist.

Vorteilhafterweise ist die Auswertungsschaltung dazu ausgebildet, die fehlerhafte Drehbewegung anhand einer Abweichung des Signals am Signaleingang von einem sinusförmigen Signal zu erfassen. Eine sinusförmige Änderung des Magnetfeldes ist nämlich charakteristisch für eine gleichmäßige Drehbewegung. Jede Abweichung von der Sinuskurve zeugt von einer der oben beschriebenen Unregelmäßigkeiten, wie z.B. einem unrunden Motorlauf.

Ein in vitro-Diagnostiksystem zur Untersuchung von Körperflüssigkeitsproben umfasst einen oben beschriebenen Magnetrührer.

Dabei umfasst das in vitro-Diagnostiksystem weiterhin vorteilhafterweise eine Steuerungseinrichtung, die mit dem Signalausgang der Auswertungsschaltung verbunden ist.

Die mit der Erfindung erzielten Vorteile bestehen insbesondere darin, dass durch die Nutzung eines Magnetfeldsensors zur Funktionsüberprüfung eines automatisiert angesteuerten Magnetrührers in einem in vitro-Diagnostik-System eine zuverlässige Rührfunktion gewährleistet ist und gleichzeitig eine besonders kompakte Bauform ermöglicht wird, da miniaturisierte Antriebsmotoren ohne integrierten Encoder verwendet werden können. Insbesondere bei Verwendung eines analogen Hall-Sensors, der nur die Größe eines Stecknadelkopfes hat, ist eine besonders kompakte Ausführung möglich, und es sind keine zusätzlichen Teile notwendig. Die Verwendung eines analogen Hall-Sensors ermöglicht zudem neben der reinen Erfassung einer Umdrehung als solches (Geschwindigkeit, Anzahl) auch die qualitative Beurteilung der Bewegung (gleichförmig, unruhig, nur Zittern usw.). Der Sensor muss nicht direkt am magnetischen Körper sitzen, sondern kann, abhängig von der Magnetstärke, bis zu mehreren cm entfernt sitzen. Dabei befindet sich auch nicht magnetisches Material wie Kunststoff oder Aluminium zwischen Sensor und Magnet. Dies ermöglicht ein flexibles Design. Die Auswertungselektronik kann vom Sensor abgesetzt untergebracht werden und ermöglicht eine optimale Integration in Systeme mit beengtem Bauraum.

Die Erfindung wird anhand einer Zeichnung näher erläutert. Darin zeigen:
- FIG 1: eine schematische Darstellung eines in vitro-Diagnostiksystems, und
- FIG 2: eine schematische Darstellung des Magnetrührers im in vitro-Diagnostiksystem.

Gleiche Teile sind in allen Figuren mit denselben Bezugszeichen versehen.

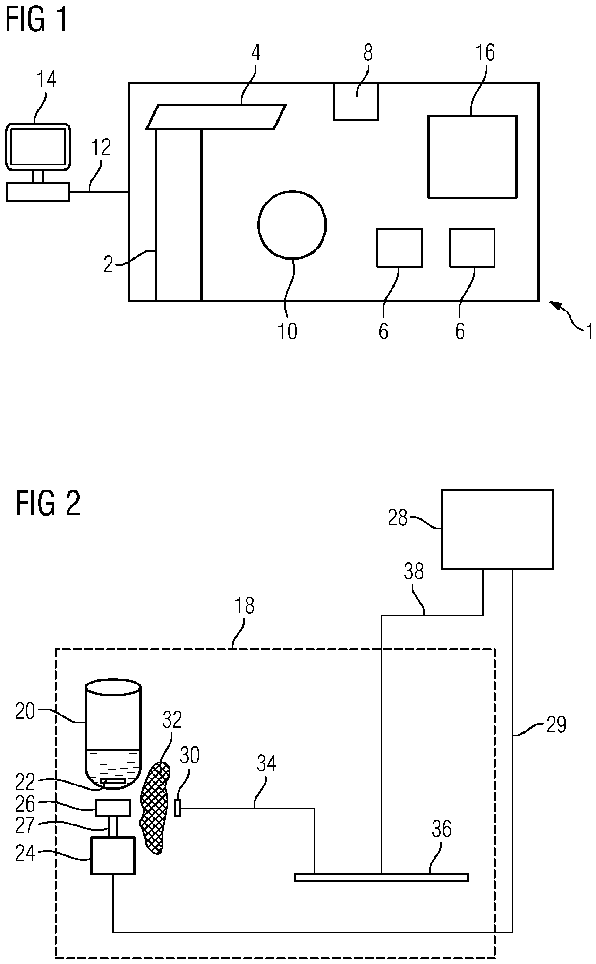

FIG 1 zeigt eine schematische Darstellung eines in vitro-Diagnostiksystems 1 mit einigen darin enthaltenen Bauteilen. Hierbei werden nur die wichtigsten Bauteile stark vereinfacht dargestellt, um die grundsätzliche Funktion des in vitro-Diagnostiksystems 1 zu erläutern, ohne hierbei detailliert die einzelnen Teile jedes Bauteils darzustellen.

Das in vitro-Diagnostiksystem 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Diese beschränken sich vielmehr auf Wartung oder Reparatur und Nachfüllarbeiten, wenn z.B. Messküvetten, Rührstäbchen oder Reagenzien nachgefüllt werden müssen.

Die Proben werden dem in vitro-Diagnostiksystem 1 auf nicht näher dargestellten Schlitten in einer Zuführungsschiene 2 zugeführt. Informationen hinsichtlich der pro Probe durchzuführenden Analysen können hierbei beispielsweise mittels auf den Probengefäßen angebrachten Strichcodes übergeben werden, die im in vitro-Diagnostiksystem 1 ausgelesen werden. Aus den Proben werden in einer Pipettiereinrichtung 4 Aliquots mittels einer nicht näher dargestellten Pipettiernadel entnommen.

Die Aliquots werden ebenfalls nicht näher dargestellten Messküvetten zugeführt, in denen die eigentlichen Analysen mittels verschiedenster Messsysteme 6 wie z.B. Spektrophotometern, Nephelometern etc. durchgeführt werden. Die Messküvetten werden aus einem Küvettenspeicher 8 entnommen. Zusätzlich können aus einem Reagenzgefäßspeicher 10 mittels einer weiteren, nicht dargestellten Pipettiernadel weitere Reagenzien der jeweiligen Messküvette zugeführt werden, die je nach durchzuführender Analyse erforderlich sind.

Der Transport der Messküvetten innerhalb des in vitro-Diagnostiksystems 1 erfolgt mit hier nicht näher dargestellten Transporteinrichtungen wie z.B. Transferarmen, die in verschiedenste Raumrichtungen bewegbar sind und eine Greifeinrichtung zum Erfassen der Messküvetten aufweisen. Der gesamte Prozess wird von einer Steuerungseinrichtung, wie z.B. einem über eine Datenleitung 12 angeschlossenen Rechner 14 gesteuert, unterstützt durch eine Vielzahl weiterer, nicht näher dargestellter elektronischer Schaltungen und Mikroprozessoren innerhalb des in vitro-Diagnostiksystems 1 und seiner Bauteile.

Nach dem Zusammenführen der Blutprobe und der Reagenzien in der Messküvette beruhen viele zur Analyse verwendete Nachweisreaktionen auf der Messung bestimmter Eigenschaften des Reaktionsansatzes nach dem Ablauf einer gewissen Inkubationszeit. Während dieser Inkubationszeit reagieren bestimmte Enzyme, Antikörper o.ä. mit Bestandteilen der Probe. Während der Inkubationszeit werden die Messküvetten in einer Inkubationseinrichtung 16 des in vitro-Diagnostiksystems 1 gelagert. Hierbei gibt es häufig die Notwendigkeit, die Reaktionsansätze in den Messküvetten regelmäßig zu durchmischen. Hierbei kommen aufgrund der kleinen Volumina miniaturisierte Magnetrührer 18 zum Einsatz, wie in FIG 2 dargestellt.

Der Magnetrührer 18 wirkt im Ausführungsbeispiel der FIG 2 auf eine Messküvette 20 mit einer zu analysierenden Körperflüssigkeit, z.B. Blut. In der Messküvette 20 befindet sich ein Rührstäbchen 22 aus einem para- oder ferromagnetischen Material wie z.B. Eisen, magnetischem Edelstahl etc. Die Messküvette 20 kann beispielsweise in einer nicht näher dargestellten Aufnahmeposition des Magnetrührers 18 eingesetzt sein oder aber direkt mittels eines Transportarms in eine geeignete Position gebracht werden. Das Rührstäbchen 22 wird manuell oder mittels einer geeigneten Zuführungsvorrichtung vor dem eigentlichen Rührvorgang in die Messküvette 20 eingeführt.

FIG 2 zeigt einen Magnetrührer 18 mit einem Antriebsmotor 24 und mit einem magnetischen Körper 26, der an der Achse 27 des Antriebsmotors 24 befestigt ist. Der magnetische Körper 26 ist als Permanentmagnet ausgelegt, wodurch nichtpermanentmagnetische Rührstäbchen 22 verwendet werden können. Die Nord-Süd-Richtung des magnetischen Körpers 26 ist senkrecht zur Achse 27 angeordnet. Die Achse 27 weist auf die Messküvette 20 mit dem Rührstäbchen 22. Bei einer Drehung des Antriebsmotors 24 dreht sich der magnetische Körper 26 ebenfalls, und das rotierende Magnetfeld wirkt auf das Rührstäbchen 22, so dass dieses ebenfalls eine Drehbewegung ausführt und die in der Messküvette 20 befindliche Flüssigkeit durchmischt.

Der Antriebsmotor 24 wird von einer Steuerungseinrichtung 28 angesteuert. Er ist mit dieser über eine Verbindungsleitung 29 verbunden. Bei der Steuerungseinrichtung 28 kann es sich um den Rechner 14 aus FIG 1 handeln, aber in der Regel wird es sich hier aber um eine vorgeschaltete spezielle Schaltung als Steuerungseinrichtung 28 in Form eines integrierten Schaltkreises handeln, die in das in vitro-Diagnostiksystem 1 integriert ist.

Damit die Steuerungseinrichtung 28 feststellen kann, ob der über die Verbindungsleitung 29 an den Antriebsmotor 24 gesendete Drehbefehl tatsächlich ordnungsgemäß zu einer Drehbewegung führt, ist im Nahbereich des magnetischen Körpers 26, d.h. in einem Abstand zwischen 1 cm und 5 cm vom magnetischen Körper 26 ein Magnetfeldsensor 30 angeordnet. Dieser ist als analoger Hall-Sensor ausgebildet und so angeordnet, dass die Verbindungslinie zwischen Magnetfeldsensor 30 und magnetischem Körper 26 senkrecht zur Achse 27 des Antriebsmotors 24 steht. Zwischen magnetischem Körper 26 und Magnetfeldsensor 30 ist noch eine nur teilweise angedeutete Abdeckung 32 angeordnet, die aus einem nichtmagnetischen Material besteht, z.B. Kunststoff oder Aluminium.

Der Magnetfeldsensor 30 ist über eine Verbindungsleitung 34 mit einem Signaleingang einer Auswertungsschaltung 36 verbunden. Ein Signalausgang der Auswertungsschaltung 36 ist wiederum über eine Verbindungsleitung 38 mit der Steuerungseinrichtung 28 verbunden. Die Auswertungsschaltung 36 ist als separate Platine mit einem integrierten Schaltkreis ausgebildet.

Die Auswertungsschaltung 36 ist mittels entsprechender Programmierung für die Ausführung eines Auswertealgorithmus ausgelegt. Dieser analysiert den Verlauf des Ausgangssignals des Magnetfeldsensors 30, d.h. des analogen Hall-Sensors. Hierbei bedeutet ein rein sinusförmiger Verlauf eine korrekte gleichförmige Drehbewegung. Abweichungen von dieser optimalen Kurvenform bedeuten Störungen in der Drehbewegung, die in Form eines Fehlersignals über die Verbindungsleitung 38 an die Steuerungseinrichtung 28 weitergegeben werden. Ein konstantes Signal bedeutet einen Stillstand, was als Stillstandssignal über die Verbindungsleitung 38 an die Steuerungseinrichtung 28 weitergegeben wird.

In beiden Fällen erkennt die Steuerungseinrichtung 28 damit, ob eine über die Verbindungsleitung 29 angesteuerte Drehbewegung auch korrekt ausgeführt wird. Ist dies nicht der Fall, wird dem Benutzer des in vitro-Diagnostiksystems 1 ein entsprechender Fehler ausgegeben. Durch das gezeigte System wird eine zuverlässige Rührfunktion gewährleistet und gleichzeitig eine besonders kompakte Bauform ermöglicht.

### BEZUGSZEICHENLISTE

- 1: in vitro-Diagnostiksystem
- 2: Zuführungsschiene
- 4: Pipettiereinrichtung
- 6: Messsystem
- 8: Küvettenspeicher
- 10: Reagenzgefäßspeicher
- 12: Datenleitung
- 14: Rechner
- 16: Inkubationseinrichtung
- 18: Magnetrührer
- 20: Messküvette
- 22: Rührstäbchen
- 24: Antriebsmotor
- 26: magnetischer Körper
- 27: Achse
- 28: Steuerungseinrichtung
- 29: Verbindungsleitung
- 30: Magnetfeldsensor
- 32: Abdeckung
- 34: Verbindungsleitung
- 36: Auswertungsschaltung
- 38: Verbindungsleitung

## Patentansprüche

1. Magnetrührer (18) für ein in vitro-Diagnostiksystem (1), umfassend einen Antriebsmotor (24), einen an einer Achse (27) des Antriebsmotors (24) befestigten magnetischen Körper (26) und einen Magnetfeldsensor (30), der dazu ausgebildet ist, eine Drehbewegung des magnetischen Körpers (26) zu erfassen,
wobei der Magnetfeldsensor (30) in einem Nahbereich des magnetischen Körpers (26) angeordnet ist, wobei der magnetische Körper (26) als Permanentmagnet ausgebildet ist, wobei der Magnetfeldsensor (30) eine Ebene schneidet, die senkrecht zur Achse (27) des Antriebsmotors (24) liegt und den magnetischen Körper (26) schneidet, **dadurch gekennzeichnet, dass** die Nord-Süd-Achse des magnetischen Körpers (26) senkrecht zur Achse (27) des Antriebsmotors (24) angeordnet ist und zwischen dem magnetischem Körper (26) und Magnetfeldsensor (30) eine nicht magnetische Abdeckung (32) angeordnet ist.

2. Magnetrührer (18) nach Anspruch 1, bei dem der Magnetfeldsensor (30) ein analoger Hall-Sensor ist.

3. Magnetrührer (18) nach einem der vorhergehenden Ansprüche, bei dem der Nahbereich des magnetischen Körpers (26) durch einen Abstand von weniger als 10 cm, vorzugsweise weniger als 5 cm zum magnetischen Körper (26) definiert ist.

4. Magnetrührer (18) nach einem der vorhergehenden Ansprüche, weiter umfassend eine Auswertungsschaltung (36) mit einem Signalausgang und einem Signaleingang, wobei der Signaleingang mit dem Magnetfeldsensor (30) verbunden ist, und wobei die Auswertungsschaltung (36) dazu ausgebildet ist, einen Stillstand zu erfassen und ein Stillstandssignal am Signalausgang bereit zu stellen.

5. Magnetrührer (18) nach Anspruch 4, bei dem die Auswertungsschaltung (36) dazu ausgebildet ist, den Stillstand anhand eines konstanten Signals am Signaleingang zu erfassen.

6. Magnetrührer (18) nach Anspruch 4 oder 5, bei dem die Auswertungsschaltung (36) dazu ausgebildet ist, eine fehlerhafte Drehbewegung zu erfassen und ein Fehlersignal am Signalausgang bereit zu stellen.

7. Magnetrührer (18) nach Anspruch 6, bei dem die Auswertungsschaltung (36) dazu ausgebildet ist, die fehlerhafte Drehbewegung anhand einer Abweichung des Signals am Signaleingang von einem sinusförmigen Signal zu erfassen.

8. In vitro-Diagnostiksystem (1), umfassend einen Magnetrührer (18) nach einem der vorhergehenden Ansprüche.

9. In vitro-Diagnostiksystem (1), umfassend einen Magnetrührer (18) nach einem der Ansprüche 4 bis 7 und ferner umfassend eine Steuerungseinrichtung (28), die mit dem Signalausgang der Auswertungsschaltung (36) verbunden ist.

## Claims

1. Magnetic stirrer (18) for an in vitro diagnostic system (1), comprising a drive motor (24), a magnetic body (26) fastened to a shaft (27) of the drive motor (24) and a magnetic field sensor (30), which is embodied to capture a rotational movement of the magnetic body (26),
wherein the magnetic field sensor (30) is arranged in the vicinity of the magnetic body (26), wherein the magnetic body (26) is embodied as a permanent magnet, wherein the magnetic field sensor (30) intersects a plane that is perpendicular to the shaft (27) of the drive motor (24) and intersects the magnetic body (26), **characterized in that** the North/South axis of the magnetic body (26) is arranged perpendicular to the shaft (27) of the drive motor (24) and a non-magnetic cover (32) is arranged between the magnetic body (26) and magnetic field sensor (30) .

2. Magnetic stirrer (18) according to Claim 1, wherein the magnetic field sensor (30) is an analogue Hall sensor.

3. Magnetic stirrer (18) according to either of the preceding claims, wherein the vicinity of the magnetic body (26) is defined by a distance of less than 10 cm, preferably less than 5 cm, from the magnetic body (26).

4. Magnetic stirrer (18) according to any one of the preceding claims, further comprising an evaluation circuit (36) with a signal output and a signal input, wherein the signal input is connected to the magnetic field sensor (30) and wherein the evaluation circuit (36) is embodied to capture a standstill and to provide a standstill signal at the signal output.

5. Magnetic stirrer (18) according to Claim 4, wherein the evaluation circuit (36) is embodied to capture the standstill on the basis of a constant signal at the signal input.

6. Magnetic stirrer (18) according to Claim 4 or 5, wherein the evaluation circuit (36) is embodied to capture a faulty rotational movement and to provide an error signal at the signal output.

7. Magnetic stirrer (18) according to Claim 6, wherein the evaluation circuit (36) is embodied to capture the faulty rotational movement on the basis of a deviation of the signal at the signal input from a sinusoidal signal.

8. In vitro diagnostic system (1), comprising a magnetic stirrer (18) according to any one of the preceding claims.

9. In vitro diagnostic system (1), comprising a magnetic stirrer (18) according to any one of Claims 4 to 7 and further comprising a control device (28), which is connected to the signal output of the evaluation circuit (36).

## Revendications

1. Agitateur (18) magnétique pour un système (1) de diagnostic in vitro, comprenant un moteur (24) d'entraînement, un corps (26) magnétique fixé à un axe (27) du moteur (24) d'entraînement et un capteur (30) de champ magnétique constitué pour détecter un mouvement de rotation du corps (26) magnétique,
dans lequel le capteur (30) de champ magnétique est disposé dans une région proche du corps (26) magnétique, le corps (26) magnétique étant constitué sous la forme d'un aimant permanent,
dans lequel le capteur (30) de champ magnétique coupe un plan, qui est perpendiculaire à l'axe (27) du moteur (24) d'entraînement et coupe le corps (26) magnétique, **caractérisé en ce que** l'axe nord-sud du corps (26) magnétique est perpendiculaire à l'axe (27) du moteur (24) d'entraînement et un recouvrement (32) amagnétique est disposé entre le corps (26) magnétique et le capteur (30) de champ magnétique.

2. Agitateur (18) magnétique suivant la revendication 1, dans lequel le capteur (30) de champ magnétique est un capteur de Hall analogique.

3. Agitateur (18) magnétique suivant l'une des revendications précédentes, dans lequel la région proche du corps (26) magnétique est définie par une distance de moins de 10 cm, de préférence de moins de 5 cm, du corps (26) magnétique.

4. Agitateur (18) magnétique suivant l'une des revendications précédentes, comprenant, en outre, un circuit (36) d'exploitation ayant une sortie du signal et une entrée du signal, l'entrée du signal étant reliée au capteur (30) de champ magnétique et le circuit (36) d'exploitation étant constitué pour détecter un arrêt et pour mettre à disposition un signal d'arrêt à la sortie du signal.

5. Agitateur (18) magnétique suivant la revendication 4, dans lequel le circuit (36) d'exploitation est constitué pour détecter l'arrêt à l'aide d'un signal constant à l'entrée du signal.

6. Agitateur (18) magnétique suivant la revendication 4 ou 5, dans lequel le circuit (36) d'exploitation est constitué pour détecter un mouvement de rotation défectueux et pour donner un signal de défaut à la sortie du signal.

7. Agitateur (18) magnétique suivant la revendication 6, dans lequel le circuit (36) d'exploitation est constitué pour détecter le mouvement de rotation défectueux à l'aide d'un écart du signal à l'entrée du signal à un signal sinusoïdal.

8. Système (1) de diagnostic in vitro comprenant un agitateur (18) magnétique suivant l'une des revendications précédentes.

9. Système (1) de diagnostic in vitro comprenant un agitateur (18) magnétique suivant l'une des revendications 4 à 7 et comprenant, en outre, un dispositif (26) de commande, qui est relié à la sortie du signal du circuit (36) d'exploitation.
